# EUROPÄISCHE PATENTSCHRIFT

(11) **EP 2 989 524 B1**
(45) Veröffentlichungstag und Bekanntmachung des Hinweises auf die Patenterteilung: **14.08.2019**
(21) Anmeldenummer: 14720084.4
(22) Anmeldetag: 24.04.2014
(51) Int. Cl.: G06F 3/01

(54) **VERFAHREN ZUM INTERAGIEREN MIT EINEM AUF EINER DATENBRILLE ANGEZEIGTEN OBJEKT**
METHOD FOR INTERACTING WITH AN OBJECT DISPLAYED ON DATA EYEGLASSES
PROCÉDÉ D'INTERACTION AVEC UN OBJET AFFICHÉ SUR DES LUNETTES DE DONNÉES

(30) Priorität: 25.04.2013 DE 102013207528
(43) Veröffentlichungstag der Anmeldung: 02.03.2016
(73) Patentinhaber: Bayerische Motoren Werke Aktiengesellschaft, 80809 München (DE)
(72) Erfinder: SPIESSL, Wolfgang, 85276 Pfaffenhofen (DE); LAUBER, Felix, 80634 München (DE); PFANNSTIEL, Jochen, 81241 München (DE)
(86) Internationale Anmeldenummer: PCT/EP2014/058324
(87) Internationale Veröffentlichungsnummer: WO 2014/174002

(56) Entgegenhaltungen:
- WO-A2-99/32959
- US-A1- 2009 110 235
- US-A1- 2012 280 903
- US-A1- 2013 021 374

## Beschreibung

Die Erfindung betrifft ein Verfahren zum Interagieren mit einem Objekt, das einem Benutzer durch eine Datenbrille angezeigt wird, wobei die Datenbrille eine Anzeige umfasst, sowie eine entsprechende Vorrichtung und ein entsprechendes Computerprogramm.

Heutzutage sind Datenbrillen, manchmal auch Head-mounted Displays, bekannt, die eine Anzeige umfassen. Eine Datenbrille wird durch einen Benutzer ähnlich einer gewöhnlichen Brille, die als Sehhilfe verwendet wird, auf dem Kopf getragen. Die Anzeige der Datenbrille befindet sich dabei im Sichtfeld des Trägers. Manche Datenbrillen umfassen eine Anzeige nur für ein Auge, andere Datenbrillen umfassen zwei Teilanzeigen, wobei jedem Auge eine Teilanzeige zugeordnet ist.

Weiterhin ist es bekannt, dass Datenbrillen eine halbtransparente Anzeige umfassen können. Eine solche Anzeige ermöglicht es dem Träger sowohl angezeigte Informationen als auch das Umfeld hinter der Anzeige zu erkennen. Darüber hinaus sind auch Datenbrillen bekannt, die eine nicht-transparente Anzeige umfassen.

Generell können mithilfe der Anzeige einer Datenbrille dieselben vom Benutzer auswählbaren Inhalte angezeigt werden, wie auf der Anzeige eines PCs des Standes der Technik. Derartige PCs umfassen beispielsweise ein LCD als Anzeige und eine Tastatur und Maus oder Touchpad als Eingabegeräte. Im Gegensatz zu einem PC des Standes der Technik sind Datenbrillen fast ebenso wie Sehhilfen-Brillen hochmobil. Bei einer Datenbrille stehen jedoch für die Bedienung nicht die typischen Ein- und Ausgabegeräte wie Tastatur oder Maus zur Verfügung bzw. deren Mitführen würde die Mobilität des Benutzers und den Komfort des Mitführens einschränken. Somit stellt sich das Problem der Bedienung von auswählbaren und/oder manipulierbaren Objekten, die auf der Anzeige einer Datenbrille angezeigt werden.

Aus dem Stand der Technik ist die Veröffentlichung US 8,228,315 bekannt, in der eine Datenbrille mit Projektor vorgeschlagen wird, der ein Muster auf eine Oberfläche projiziert. Eine Kamera erfasst dann die Interaktion eines Benutzers mit dem Muster, um eine Eingabe des Nutzers abzuleiten. Ein Nachteil dieses Verfahrens ist, dass hierfür ein Projektor in der Datenbrille benötigt wird.

Dokument US 2013/0021374 A1 offenbart eine Datenbrille mit einer von einem Benutzer der Datenbrille weg gerichteten Videokamera, wobei die Datenbrille zur Anzeige von Echtzeitbildern der Umgebung des Benutzers eingerichtet ist. Durch die Datenbrille angezeigte Objekte können vom Benutzer mittels Handgesten selektiert werden. In einem Beispiel bildet der Benutzer hierfür mit Daumen und Zeigefinger der jeweils rechten und linken Hand einen Rahmen mit dem das zu selektierende Objekt umschlossen wird.

Dokument US 2009/0110235 A1 offenbart eine Brille mit einer von einem Benutzer der Brille weg gerichteten Kamera zur Erfassung von Handgesten und einem Infrarotsensor zur Erfassung, ob der Benutzer der Brille eines seiner beiden Augen für eine vorgegebene Zeitspanne geschlossen hält. Der Benutzer der Brille kann mit Objekten in seiner Umgebung wie z.B. einem Fernseher oder einem DVD-Spieler interagieren, indem er ein Auge schließt und das gewünschte Objekt mit dem geöffneten Auge mittels einer das Objekt einrahmenden Handgeste anpeilt.

Dokument WO 99/32959 A2 offenbart ein System zum Darstellen eines Satzes an Optionen auf einem Bildschirm, die durch einen vor einer Kamera stehenden Benutzer wählbar sind.

Dokument US 2012/0280903 A1 offenbart eine vom Nutzer getragene Vorrichtung, die Bewegungen erkennt mit teilweise transparenten Anzeigen.

Die der Erfindung zugrundeliegende Aufgabe ist somit, ein Verfahren und eine Vorrichtung bereitzustellen, die die Eingabemöglichkeiten für interaktive Objekte, die von einer Datenbrille angezeigt werden, zu verbessern.

Die Aufgabe der Erfindung wird von den unabhängigen Patentansprüchen gelöst. Vorteilhafte Weiterbildungen sind in den abhängigen Ansprüchen definiert.

In einem ersten Aspekt umfasst ein Verfahren zum Interagieren mit einem Objekt, das einem Benutzer durch eine Datenbrille angezeigt wird, wobei die Datenbrille eine Anzeige umfasst, Folgendes: Anzeigen des Objektes für den Benutzer mithilfe der Anzeige die Datenbrille; Erfassen, dass der Benutzer sein erstes Auge schließt und während einer vorgegebenen Zeitspanne geschlossen hält, mithilfe einer ersten Kamera der Datenbrille, die das Auge des Benutzers aufnimmt; Aufnehmen einer Hand des Benutzers mithilfe einer zweiten Kamera; Feststellen des Sitzes der Datenbrille in Bezug auf das zweite Auge des Benutzers mithilfe einer dritten Kamera der Datenbrille, die in Richtung des zweiten Auges gerichtet ist; Bestimmen, dass der Benutzer eine Eingabehandlung während der Zeitspanne vornimmt; wobei die Eingabehandlung darin besteht, dass die Hand des Benutzers eine Haltung und, aus der Perspektive des zweiten Auges des Benutzers in Bezug auf das Objekt, eine Position einnimmt, die einer vorbestimmten Bedingung genügen; Ausführen einer Aktion in Bezug auf das Objekt, wobei die Aktion der Eingabehandlung vorab zugeordnet ist.

Dem Benutzer wird es so beispielsweise ermöglicht mit seiner Hand mit einem auf der Datenbrille angezeigtes Objekt zu interagieren. Insbesondere ermöglicht es das Verfahren, aus mehreren angezeigten Objektes eines auszuwählen beziehungsweise mit einem bestimmten oder mehreren bestimmten zu interagieren. Dazu kann der Benutzer beispielsweise mit dem Daumen und Zeigefinger einen Ring bilden und die Hand so positionieren, dass das Objekt, das er auswählen möchte, sich aus seiner Perspektive (der des zweiten Auges) in dem Ring befindet. Gemäß dem Verfahren wird erkannt, dass der Benutzer seine Hand in dieser Haltung um das bestimmte Objekt platziert hat, und das Objekt wird ausgewählt. Mit anderen Worten: Der Benutzer bestimmt durch eine geeignete Handgeste einen aktiven Bereich in dem ihm angezeigten virtuellen Bild (also der gesamten Anzeigefläche der Datenbrille), der zur Auswahl des oder Interaktion mit dem darin befindlichen Objekt verwendet wird. Die Größe der angezeigten Objekte sowie die Entfernung der Hand zum zweiten Auge des Benutzers können hierbei Einflussgrößen sein. Je näher sich die Hand am zweiten Auge des Benutzers befindet, desto größer ist der davon auswählbare Bereich bzw. desto mehr Objekte oder größere Objekte können ausgewählt werden bzw. mit ihnen interagiert werden.

Auf diese Weise kann der Benutzer mit dem Objekt interagieren, ohne sich externer Hilfsmittel oder eine äußeren Infrastruktur wie die Eingabemittel einer Tastatur oder einer Maus bedienen zu müssen. Die Mobilität und der Komfort der Bedienung der Datenbrille werden so sichergestellt. Gleichzeitig ist die Eingabe intuitiv, denn der Benutzer kann mit seiner Hand "zeigen" was er auswählen möchte, und zwar ähnlich intuitiv, wie bei einem Touch Screen (einem berührungsempfindlichen Bildschirm). Im Gegensatz zur Interaktion mit Touch Screens kann die Interaktion gemäß dem vorgestellten Verfahren auch beispielsweise mit Handschuhen erfolgen und es wird nur eine Hand zur Eingabe benötigt, da kein Gerät gehalten werden muss. Damit ermöglicht das Verfahren auch Eingaben bei extremen Temperaturen und speziellen Hygieneanforderungen, da es kontaktlos ist. Gleichzeitig wird die Privatsphäre des Nutzers gewahrt, da nur er sehen kann, mit welchen Inhalten er interagiert.

Als Auslöser für den Interaktionsmodus bzw. die Möglichkeit eine Eingabehandlung vorzunehmen, dient das Schließen eines Auges des Benutzers. Dies ist notwendig, da ansonsten die Perspektive des Benutzers nicht eindeutig ist. In dem Fall, dass die Datenbrille für jedes Auge eine Teilanzeige umfasst nimmt der Benutzer die Anzeige der Datenbrille über beide Augen wahr. Für jedes Auge erscheint die Hand des Benutzers dann an einer anderen Stelle. Um eine eindeutige Eingabe zu ermöglichen muss festgelegt werden, über welches Auge des Benutzers sich die Perspektive des Benutzers bestimmt. Hier ist dies das zweite Auge, das der Benutzer während der Zeitspanne, in der das erste Auge geschlossen ist, weiterhin zum Sehen verwendet und das damit die meiste Zeit, abgesehen von Augenzwinkern, geöffnet ist. Es kann dabei vorgesehen sein, dass immer ein bestimmtes Auge (entweder das rechte oder das linke) geschlossen werden muss, um eine Eingabehandlung vornehmen zu können. Falls für beide Augen erkannt werden kann, welches gerade geschlossen ist, kann auch für das jeweils nicht geschlossene Auge die Eingabehandlung ermöglicht werden. Die Erkennung eines dauerhaften bzw. über ein Blinzeln hinausgehenden Schließens eines Auges kann als Aktivierung der Möglichkeit der Eingabehandlung, insbesondere eines Objekt-Auswahlmodus, verwendet werden.

Die Erkennung, ob das erste Auge geöffnet oder geschlossen ist, erfolgt mithilfe einer Kamera, die in der Datenbrille umfasst ist oder an dieser montiert ist und in Richtung des ersten Auges des Benutzers Aufnahmen macht. Die Kamera muss zu diesem Zweck keine besonderen Anforderungen an die Auflösung erfüllen, da die Unterscheidung, ob das Auge geöffnet oder geschlossen ist auch bei einer geringen Auflösung von z.B. 4000 Bildpunkten möglich ist. Eine weitere Kamera in der Datenbrille, die in Richtung des zweiten Auges des Benutzers gerichtet ist, wird dazu verwendet, den Sitz der Datenbrille in Bezug auf das zweite Auge, und genauer die Pupille, des Benutzers festzustellen. Dies ermöglicht die Bestimmung, wie die Anzeige der Datenbrille in Bezug zum zweiten Auge des Benutzers ausgerichtet ist, und damit die Bestimmung, in welcher Richtung für den Benutzer angezeigte Inhalte, wie das Objekt, erscheinen. Dazu wird typischerweise die Position der Pupillenmitte in der Aufnahme der Kamera ausgewertet. Da die Ausrichtung der Kamera in Bezug auf die Anzeige der Datenbrille bekannt ist, kann so auf die Ausrichtung der Anzeige in Bezug auf das Auge des Benutzers rückgeschlossen werden. In einer nicht beanspruchten Alternative wird die Ausrichtung der Anzeige der Datenbrille in Bezug auf das zweite Auge des Benutzers als bekannt vorausgesetzt. Dies ist zum Beispiel dann sinnvoll, wenn die Datenbrille derart gestaltet ist, dass sie stets in der selben Position auf dem Kopf des Benutzers sitzt und die Ausrichtung der Anzeige in Bezug zum zweiten Auge des Benutzers daher bekannt ist, gegebenenfalls weil die Ausrichtung zu Anfang einmal gemessen oder kalibriert wurde.

Darüber hinaus kann die festgestellte Ausrichtung der Datenbrille über die Kamera oder die beiden Kameras der Datenbrille auch dazu dienen augmented reality Inhalte, auch kontaktanaloge Inhalte genannt, für den Benutzer ortsrichtig anzuzeigen.

Eine Alternative zur Verwendung einer Kamera in der Datenbrille um deren Ausrichtung festzustellen oder das Schließen des ersten Auges zu erfassen, wäre es beispielsweise in einem Fahrzeug eine Kamera zu montieren, die den Benutzer aufnimmt, was jedoch nicht Gegenstand der Erfindung ist. Aus den Aufnahmen dieser Kamera könnte dann auch die Position der Anzeige der Datenbrille in Bezug auf die Augen des Benutzers oder in Bezug auf den Kopf des Benutzers ermittelt werden.

Die Hand des Benutzers kann durch eine weitere Kamera in der Datenbrille aufgenommen werden, wobei diese weitere Kamera derart an der Datenbrille montiert ist, dass sie in dieselbe Richtung schaut, wie der Benutzer beim Geradeausschauen sehen würde. Generell sind natürlich auch andere Ausrichtungen denkbar. Diese Kamera nimmt dann die Hände des Benutzers auf. Die aufgenommenen Hände des Benutzers können in Relation zu dessen Kopf gesetzt werden. Generell ist es auch denkbar, dass eine beispielsweise in einem Fahrzeug verbaute Kamera die Hände des Benutzers aufnimmt. Dies kann die oben bereits für den Zweck der Erfassung des geschlossenen Auges erwähnte Kamera sein. Diese Kamera im Fahrzeug kann also zwei Funktionen erfüllen. Es kann zum Aufnehmen der Hand des Benutzers aber auch eine separate Kamera im Fahrzeug vorgesehen sein.

Wenn der Benutzer beispielsweise eine Eingabehandlung ausführt, in der der Daumen und der Zeigefinger einen Ring bilden, ändert sich aus der Perspektive des zweiten Auges der vom Ring umschlossene Bereich der Anzeige mit der Entfernung des Rings von der Anzeige. In dem Verfahren kann vorgesehen sein, dass bei der Bestimmung, ob die Position und Haltung der Hand des Benutzers der vorbestimmten Bedingung genügen, auch die Entfernung der Hand zum zweiten Auge des Benutzers oder der Anzeige der Datenbrille berücksichtigt werden. Die Bestimmung der Entfernung kann auf verschiedene Arten geschehen. Einerseits können von der Hand bekannte Größen mit diesen Größen in der Aufnahme der Kamera (der Datenbrille oder beispielsweise des Fahrzeugs) verglichen werden. Gegebenenfalls kann hierzu vorgesehen sein, Markierungen oder Gegenstände bekannter Größe in der Hand halten. In manchen Varianten des Verfahrens genügt hierbei die Bestimmung eines Bereiches der Entfernung, wobei die Definition der Bereiche auch von den angezeigten Inhalten bzw. Objekten in der Datenbrille abhängen kann. Werden beispielsweise die Objekte so angeordnet, dass die Position der Hand und die Handhaltung schon bei einer groben Angabe der Entfernung eindeutig einem angezeigten Objekt zugeordnet werden können, kann die vorgegebene Bedingung der Eingabehandlung als erfüllt angesehen werden.

Darüber hinaus kann eine Ergänzung der Kamera um beispielsweise einen InfrarotSensor ermöglichen, die Distanz zu der aufgenommenen Hand zu bestimmen. Weiterhin können sogenannte aus dem Stand der Technik bekannte Time-of-Flight Kameras verwendet werden, bei denen für jeden Bildpunkt der Aufnahme (oder nur für einen gewissen Anteil der Bildpunkte) auch die Entfernung des aufgenommenen Gegenstandes, hier der Hand, bestimmt wird.

Das Verfahren kann vorsehen, dass Strahlengänge der Hand zum zweiten Auge des Benutzers bestimmt werden und die Position der Schnittpunkte der Strahlengänge mit der Anzeige bestimmt werden. Anhand der Position der Schnittpunkte mit der Anzeige und der Position der in der Anzeige angezeigten Objekte kann der Bezug der Position der Hand zu einem oder mehreren Objekten der auf der Anzeige angezeigten Objekte hergestellt werden. So kann festgestellt werden, ob die Haltung und Position der Hand für ein bestimmtes Objekt der vorbestimmten Bedingung genügen. Die Auswahl der Strahlengänge kann anhand einer Vorklassifizierung der erkannten Handhaltung (oder der Handposition) geschehen. Ein Strahlengang wird hierin auch als Hand-Auge Vektor bezeichnet.

Wird beispielsweise erkannt, dass Daumen und Zeigefinger einen Ring bilden, können in gleichmäßigen Abständen Punkte auf der Hand (vorteilhafterweise entlang des inneren Umfangs des Rings) bestimmt werden, für die der Strahlengang zum zweiten Auge des Benutzers bestimmt wird. Die entstehenden Schnittpunkte auf der Anzeige können dann durch Linien verbunden werden, oder ein die Schnittpunkte verbindender Ring auf andere Weise bestimmt werden, wie beispielsweise aus der klassischen Geometrie bekannt. In dem Verfahren kann also zur Auswertung der Schnittpunkte der Strahlengänge mit der Anzeige das Vorwissen über die Handhaltung berücksichtigt werden. Die so entstehende Figur bzw. Abbildung der Handhaltung auf der Anzeige wird zur Auswahl eines oder mehrerer Objekte aus den auf der Anzeige angezeigten Objekten verwendet. Beispielsweise können alle Objekte ausgewählt werden (bzw. mit diesen interagiert werden), die vollständig oder teilweise in der Abbildung der Handhaltung auf der Anzeige liegen. In diesem Zusammenhang ist es offensichtlich, dass, je näher die Hand an der Anzeige gehalten wird, die Abbildung der Handhaltung auf der Anzeige umso größer wird, und umso mehr Objekte ausgewählt werden.

Insgesamt kann gesagt werden, dass die Position der Hand, die Position der Kamera, die die Hand aufnimmt, die Position der Anzeige und die Position des virtuellen Inhalts und gegebenenfalls die Position des zweiten Auges miteinander in Beziehung gesetzt werden müssen, was auch als Korrelation und Verarbeitung bezeichnet werden kann.

In einer Weiterbildung umfasst das Bestimmen, dass der Benutzer eine Eingabehandlung vornimmt, Folgendes: Bestimmen der räumlichen Position der Hand in Bezug auf die Position der Anzeige der Datenbrille; und Bestimmen der Position des Objektes innerhalb der Anzeige, wobei die räumliche Position des zweiten Auges in Bezug auf die Anzeige der Datenbrille bekannt ist. Mithilfe dieser Angaben kann bestimmt werden, in welcher Beziehung, insbesondere optischen Beziehung, sich für den Benutzer aus der Perspektive seines zweiten Auges ein Objekt zu der Hand verhält. So kann dann bestimmt werden, ob die Bedingungen für die Eingabehandlung erfüllt sind.

In einer Weiterbildung gibt die vorbestimmte Bedingung eines oder mehrere der Folgenden vor: a) die Hand nimmt eine Haltung ein, in der mit den Fingern ein Ring oder Kreis gebildet wird oder im Wesentlichen ein Ring gebildet wird und die Hand wird so positioniert, dass das Objekt aus der Perspektive des zweiten Auges von dem Ring beziehungsweise Kreis umschlossen wird; b) die Hand nimmt eine Haltung ein, in der Daumen und Zeigefinger gestreckt sind und ungefähr einen Winkel von 90° bilden oder symbolisieren sollen, und die Hand wird so positioniert, dass sich das Objekt aus der Perspektive des zweiten Auges zumindest teilweise in einem Rechteck befindet, dessen zwei kurze Kantenlängen der Länge des Daumens entsprechen und dessen zwei lange Kantenlängen der Länge des Zeigefingers entsprechen, und dessen Position aus der Perspektive des zweiten Auges so ist, dass zwei Kanten mit dem Daumen und Zeigefinger übereinstimmen; c) die Hand nimmt eine Haltung ein, in der Daumen und Zeigefinger gemeinsam ungefähr ein U bilden und die Hand wird so positioniert, dass das Objekt, aus der Perspektive des zweiten Auges zumindest teilweise in dem U enthalten ist; d) die Hand nimmt eine Haltung ein, in der nur der Zeigefinger gestreckt ist und die Hand ist so positioniert, dass der Zeigefinger aus der Perspektive des zweiten Auges das Objekt berührt oder zumindest in dessen Richtung deutet. Dieses sind intuitive Gesten, durch die mit Objekten interagiert werden kann.

In einer anderen Weiterbildung umfasst das Verfahren ferner: Aufnehmen der zweiten Hand des Benutzers; insbesondere mithilfe der zweiten Kamera; wobei die Eingabehandlung zusätzlich darin besteht, dass die zweite Hand des Benutzers eine Haltung und, aus der Perspektive des zweiten Auges des Benutzers in Bezug auf das Objekt, eine Position einnimmt, die der vorbestimmten Bedingung genügen, wobei die vorbestimmte Bedingung sowohl für die erste als auch für die zweite Hand die Haltung und die Position vorgibt. Es sind somit auch beidhändige Eingabehandlungen möglich und das Spektrum möglicher Haltungen und Positionen wird wesentlich differenzierter. Hierbei kann die vorbestimmte Bedingung folgendes vorgeben: die erste und die zweite Hand nehmen jeweils eine Haltung ein, in der Daumen und Zeigefinger gemeinsam ungefähr ein U bilden und die erste und die zweite Hand werden jeweils so positioniert, dass das Objekt, aus der Perspektive des zweiten Auges zumindest teilweise in dem jeweiligen U enthalten ist, insbesondere ist die Haltung und Position der ersten und der zweiten Hand derart, dass die Öffnungen der jeweiligen Us zueinander zeigen.

Aktionen, die mit Bezug auf das Objekt, für das die Bedingungen der Eingabehandlung erfüllt sind, ausgeführt werden können, sind beispielsweise folgende: Auswahl des Objektes beziehungsweise Markieren des Objektes, Starten der Verschiebung des Objektes, Löschen, Starten oder Beenden. Die Aktion kann auch vom Typ des Objektes beziehungsweise der Repräsentation eines Datenobjektes abhängen, so kann für ein Symbol für eine Anwendung die Aktion das Starten der Anwendung sein. Objekttypen können sein: Symbole, Links, Funktionen, Anwendungen, Text, Bilder, Videos oder Audiodateien. Die Objekte können beliebig tief ineinander verschachtelt sein.

In einer Weiterbildung umfasst das Verfahren ferner: Bestimmen, dass der Benutzer eine zweite Eingabehandlung während der Zeitspanne vornimmt; wobei die zweite Eingabehandlung darin besteht, dass die Hand des Benutzers die Haltung der ersten Eingabehandlung aufgibt; Ausführen einer zweiten Aktion in Bezug auf das Objekt, wobei die zweite Aktion der zweiten Eingabehandlung vorab zugeordnet ist. Auf diese Weise kann beispielsweise eine Drag-and-Drop Aktion ausgeführt werden. Mit der ersten Eingabehandlung, beispielsweise dem Formen eines Rings aus Daumen und Zeigefinger um ein Objekt herum, wird das Objekt ausgewählt und "verschiebbar" gemacht. Das Objekt kann dann bei geschlossenem Ring "verschoben" werden, also seine Position auf der Anzeige entsprechend der Positionsänderung der Hand ändern. Wird dann von der Hand der Ring aus Daumen und Zeigefinger aufgelöst, so wird das Objekt de-selektiert, also "fallen gelassen" und ist nicht mehr für die Drag-and-Drop Aktion ausgewählt.

Auf diese Weise sind auch Abfolgen von Handhaltungen denkbar, die Abfolgen von Aktionen für ein Objekt auslösen. So könnte ein Objekt durch die Markierung mit einem Ring aus Daumen und Zeigefinger zunächst ausgewählt werden. Ändert der Benutzer dann die Handhaltung zu einer Faust, kann dies die Aktion des Löschens auslösen. Auf die daraufhin ausgelöste Rückfrage, ob tatsächlich gelöscht werden soll, kann die Handinnenfläche gezeigt werden, was das Löschen bestätigt. Wird der Handrücken gezeigt, wird das Objekt nicht gelöscht. Insgesamt können also für ein Objekt nach dessen Auswahl mehrere verschiedene Aktionen ausgeführt werden, wobei für jede Aktion eine Eingabehandlung vorgesehen ist. Nach der Auswahl eines oder mehrerer Objekte kann die Bedingung einer Eingabehandlung vorsehen, dass lediglich an die Haltung der Hand Anforderungen gestellt werden, die Position der Hand dahingegen nicht mehr berücksichtigt wird.

In einer Weiterbildung umfasst das Verfahren ferner: Anzeigen von Teilen des Objektes nur in Bereichen, in denen die Hand des Benutzers, aus der Perspektive des zweiten Auges des Benutzers, nicht überdeckt wird. Die Hand des Benutzers kann natürlich von den angezeigten Objekten der Datenbrille verdeckt werden. Um dies zu unterbinden kann der Umriss der Hand erkannt werden, insbesondere von einer Kamera der Datenbrille, um Objekte oder Teile davon dort nicht anzuzeigen, wo sie aus Sicht des zweiten Auges des Benutzers, die Hand verdecken würden. Auf diese Weise kann sichergestellt werden, dass der Benutzer den Bezug der Hand zum Objekt, mit dem interagiert werden soll, sehen kann und optimal herstellen kann. Hierzu wird zunächst mit Hilfe des Hand-Auge Vektors oder Vektoren beziehungsweise von Strahlengängen die Schnittfläche zwischen der realen Hand und der virtuellen Inhalten auf der Anzeige berechnet. Beim anschließenden Rendern (Aufbereiten der Anzeige) kann nun diese Schnittfläche ausgespart oder eingefärbt werden.

In einem anderen Aspekt umfasst eine Vorrichtung eine Datenbrille und elektronische Verarbeitungsmittel, wobei die Vorrichtung dazu eingerichtet ist, eines der vorstehenden Verfahren auszuführen. Die Datenbrille kann eine auf ein Auge des Benutzers gerichtete Kamera und eine in Blickrichtung des Benutzers gerichtete Kamera, insbesondere TOF Kamera, umfassen. Die elektronischen Verarbeitungsmittel können ein Computer, ein Mikrocontroller oder beispielsweise dedizierte Schaltkreise sein.

In wieder einem anderen Aspekt ist ein Computerprogramm dazu eingerichtet, einen Computer zur Ausführung eines Verfahrens nach einem der oben erläuterten Verfahren zu veranlassen.

### KURZE BESCHREIBUNG DER ZEICHNUNGEN

Fig. 1 zeigt schematisch einen Benutzer mit Datenbrille gemäß einem Ausführungsbeispiel.
Fig. 2 bis 3 zeigen schematisch eine Sicht des Benutzers aus einem Auge gemäß Ausführungsbeispielen.
Fig. 4 zeigt schematisch die Bestimmung eines Hand-Auge-Objekt Vektors gemäß einem Ausführungsbeispiel.
Fig. 5 zeigt schematisch eine Sicht des Benutzers aus einem Auge gemäß Ausführungsbeispielen.
Fig. 6a bis 6d zeigen schematisch Eingabehandlungen zur Auswahl eines Objektes gemäß einem Ausführungsbeispiel.
Fig. 7 zeigt ein Ablaufdiagramm eines Verfahrens gemäß einem Ausführungsbeispiel.

Gleiche Bezugszeichen beziehen sich auf sich entsprechende Elemente über die Figuren hinweg.

### DETAILLIERTE BESCHREIBUNG DER AUSFÜHRUNGSBEISPIELE

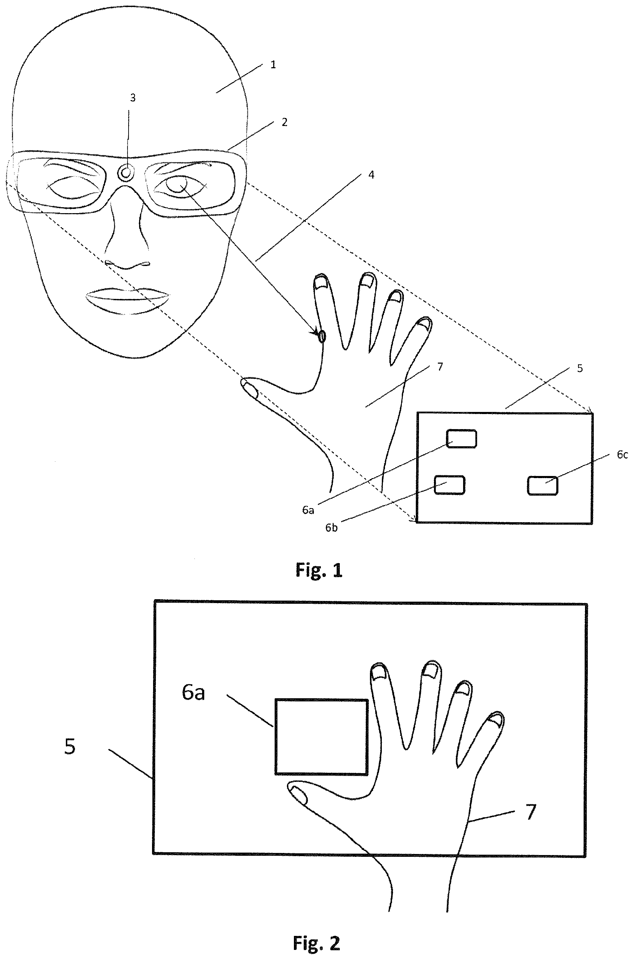

Fig. 1 zeigt schematisch einen Benutzer 1 mit Datenbrille 2, der eine Eingabehandlung mit seiner Hand 7 vornimmt, gemäß einem Ausführungsbeispiel. Die Datenbrille umfasst eine TOF-Kamera 3, die in diejenige Richtung Aufnahmen macht, die der Richtung des Gradeausschauens des Benutzers 1 entspricht. Die Datenbrille 1 umfasst zwei halbdurchlässige Teilanzeigen (nicht dargestellt), durch die dem Benutzer 1, das virtuelle Bild 5 angezeigt wird. In diesem virtuellen Bild 5 werden dem Benutzer 1 Objekte 6a bis 6c angezeigt. Die Datenbrille enthält auf der Innenseite (nicht sichtbar) zwei Kameras, mit deren Hilfe je ein Auge des Benutzers 1 aufgenommen wird. Aus der Position des zweiten Auges des Benutzers in der Aufnahme kann auf die Ausrichtung der Anzeige der Datenbrille in Bezug auf das zweite Auge geschlossen werden. Um den Eingabemodus zu aktivieren schließt der Benutzer 1 sein rechtes Auge für eine gewisse Zeitdauer (Pupille des rechten Auges ist in Fig. 1 nicht sichtbar) und hält es während der Eingabe geschlossen. Der Benutzer 1 hält seine Hand 7 vor seinen Kopf in sein Sichtfeld. Es wird der Hand-Auge Vektor 4 für einen Punkt (Kreismarkierung) der Hand 7 bestimmt. Mithilfe des Hand-Auge Vektors, und insbesondere mithilfe dessen Schnittpunkts mit der Anzeige der Datenbrille, kann aus der Perspektive des Auges des Benutzers 1 auf die Anordnung der Objekte 6a bis 6c in Bezug auf den kreismarkierten Punkt der Hand 7 des Benutzers 1 geschlossen werden. Es wird überprüft, ob der Benutzer die Hand in eine Haltung hält die der Bedingung der Eingabehandlung zum Auswählten entspricht. Ferner wird bestimmt (insbesondere mithilfe der Schnittpunkte von Hand-Augen Vektoren mit der linken Teilanzeige der Datenbrille, welches Objekt ausgewählt wurde.

Fig. 2 zeigt schematisch eine Sicht des Benutzers aus einem Auge gemäß einem Ausführungsbeispiel. Die Hand 7 des Benutzers bildet mit Daumen und Zeigefinger ungefähr einen rechten Winkel. In diesem Winkel befindet sich das Objekt 6a, das im virtuellen Bild 5 angezeigt wird.

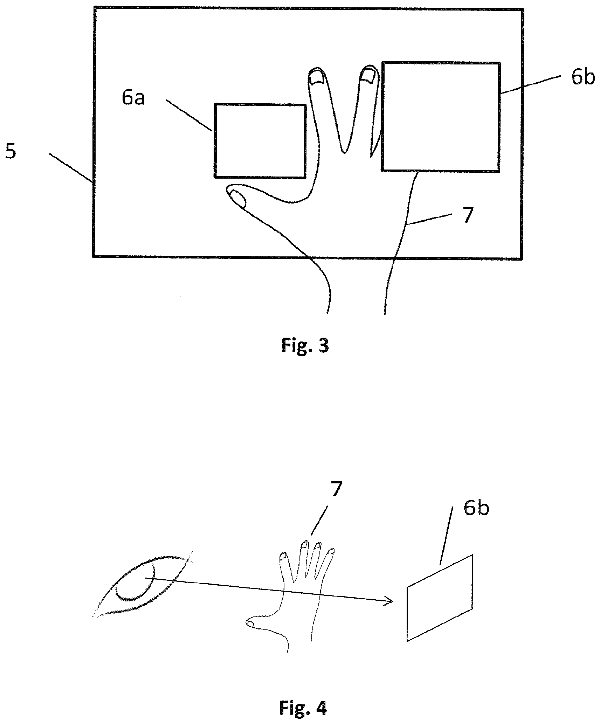

Fig. 3 zeigt schematisch eine Sicht des Benutzers aus einem Auge gemäß einem Ausführungsbeispiel. Dieses Beispiel baut auf dem Beispiel der Fig. 2 auf. Zusätzlich wird jedoch das Objekt 6b dargestellt. Dieses wird ohne Berücksichtigung der Hand dargestellt und überlagert so in der Ansicht des Benutzers die Hand 7. Der Benutzer kann so nicht überprüfen, ob er die korrekte Handstellung einnimmt und die korrekte Position.

Fig. 4 zeigt schematisch die Bestimmung eines Hand-Auge-Objekt Vektors gemäß einem Ausführungsbeispiel. Mithilfe dieser Bestimmung kann die Verdeckung von Teilen der Hand 7 durch das Objekt 6b festgestellt werden.

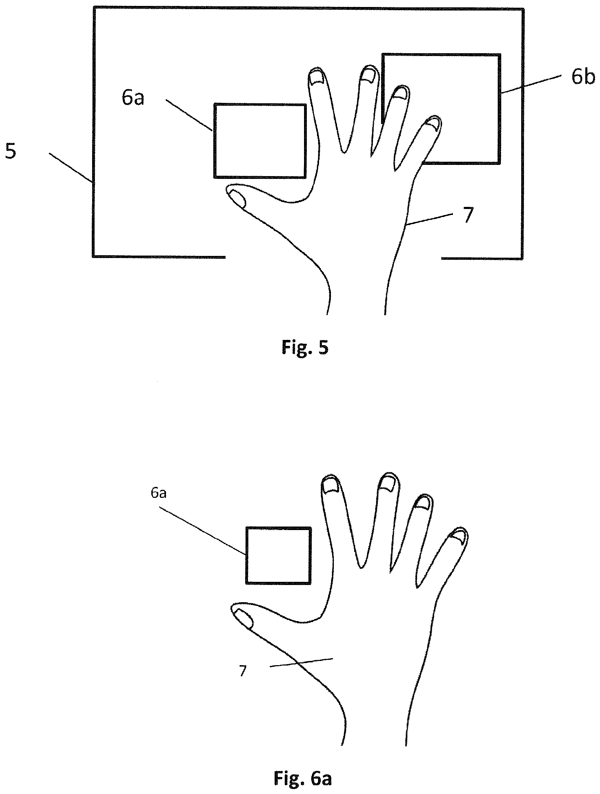

Fig. 5 zeigt schematisch eine Sicht des Benutzers aus einem Auge gemäß einem Ausführungsbeispiel. Dieses Beispiel baut auf dem Beispiel der Fig. 2 auf. Jedoch wird die mögliche Überdeckung der Hand 7 durch das Objekt 6b berücksichtigt und das Objekt 6b nur dort dargestellt, wo die Hand nicht ist. Dies ermöglicht dem Benutzer eine bessere Korrektur und Ausführung der Handhaltung und der Handpositionierung.

Fig. 6a bis 6d zeigen schematisch Eingabehandlungen zur Auswahl eines Objektes gemäß einem Ausführungsbeispiel.

Fig. 6a zeigt, dass die Hand 7 eine Haltung einnimt, in der Daumen und Zeigefinger gestreckt sind und ungefähr einen Winkel von 90° bilden oder symbolisieren sollen, und die Hand wird so positioniert, dass sich das Objekt aus der Perspektive des zweiten Auges zumindest teilweise in dem Winkel befindet, also in einem Rechteck befindet, dessen zwei kurze Kantenlängen der Länge des Daumens entsprechen und dessen zwei lange Kantenlängen der Länge des Zeigefingers entsprechen, und dessen Position aus der Perspektive des zweiten Auges so ist, dass zwei Kanten mit dem Daumen und Zeigefinger übereinstimmen.

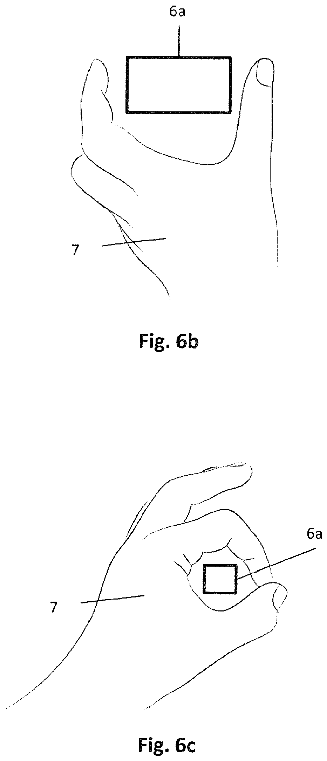

Fig. 6b zeigt, dass die Hand 7 eine Haltung einnimmt, in der Daumen und Zeigefinger gemeinsam ungefähr ein U bilden und die Hand 7 wird so positioniert, dass das Objekt 6a, aus der Perspektive des zweiten Auges zumindest teilweise in dem U enthalten ist.

Fig. 6c zeigt, dass die Hand 7 eine Haltung einnimmt, in der mit dem Daumen und dem Zeigefinger, ein Ring oder Kreis gebildet wird oder im Wesentlichen ein Ring gebildet wird und die Hand 7 wird so positioniert, dass das Objekt 6a aus der Perspektive des zweiten Auges von dem Ring beziehungsweise Kreis umschlossen wird.

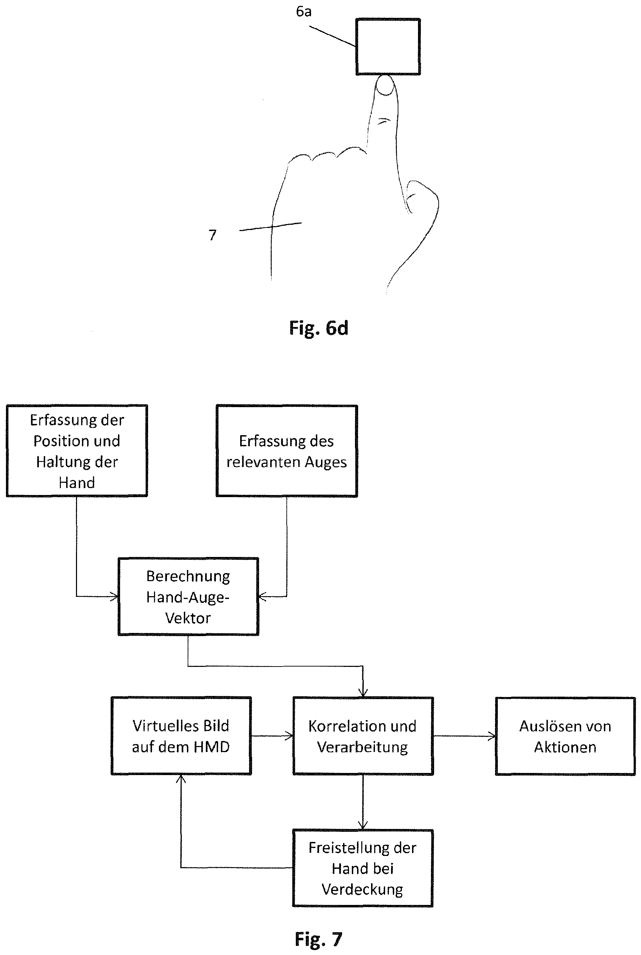

Fig. 6d zeigt, dass die Hand 7 eine Haltung einnimmt, in der nur der Zeigefinger gestreckt ist und die Hand 7 ist so positioniert, dass der Zeigefinger aus der Perspektive des zweiten Auges das Objekt berührt.

Fig. 7 zeigt ein Ablaufdiagramm eines Verfahrens gemäß einem Ausführungsbeispiel. Zunächst werden die räumliche Position und Haltung der Hand erfasst sowie die Position des relevanten, hier zweiten, Auges. Es wird der Hand-Auge Vektor berechnet. In dem Block "Korrelation und Verarbeitung" wird die Schnittpunkte des Hand-Auge Vektors mit der Anzeige berechnet und in Bezug zu den Positionen der angezeigten Objekte gesetzt. Falls die Hand von Objekten verdeckt wird, so wird diese freigestellt indem die Objekte dort nicht angezeigt werden, wo sich die Hand befindet und ein neues virtuelles Bild auf der Datenbrille wird errechnet bzw. gerendert. Das neue virtuelle Bild wird angezeigt. Anhand der Korrelation und Verarbeitung werden Aktionen ausgelöst, wenn die Bedingungen der entsprechenden Eingabehandlung erfüllt sind, der die Aktion zugeordnet ist.

## Patentansprüche

1. Verfahren zum Interagieren mit einem Objekt (6a-6c), das einem Benutzer (1) durch eine Datenbrille (2) angezeigt wird, wobei die Datenbrille (2) eine Anzeige umfasst, umfassend:
Anzeigen des Objektes (6a-6c) für den Benutzer (1) mithilfe der Anzeige der Datenbrille (2);
Erfassen, mithilfe einer ersten Kamera der Datenbrille, die ein erstes Auge des Benutzers (1) aufnimmt, dass der Benutzer (1) sein erstes Auge schließt und während einer vorgegebenen Zeitspanne geschlossen hält;
Aufnehmen einer Hand (7) des Benutzers (1) mithilfe einer zweiten Kamera (3);
Feststellen des Sitzes der Datenbrille (2) in Bezug auf das zweite Auge des Benutzers (1) mithilfe einer dritten Kamera der Datenbrille (2), die in Richtung des zweiten Auges gerichtet ist;
Bestimmen, dass der Benutzer (1) eine Eingabehandlung für das Objekt (6a-6c) während der Zeitspanne vornimmt;
wobei die Eingabehandlung darin besteht, dass die Hand (7) des Benutzers (1) eine Haltung und, aus der Perspektive des zweiten Auges des Benutzers (1) in Bezug auf das Objekt, eine Position einnimmt, die einer vorbestimmten Bedingung genügen; und
Ausführen einer Aktion in Bezug auf das Objekt (6a-6c), wobei die Aktion der Eingabehandlung vorab zugeordnet ist.

2. Verfahren nach Anspruch 1, wobei die vorbestimmte Bedingung eines oder mehrere der Folgenden vorgibt:
a) die Hand (7) nimmt eine Haltung ein, in der mit den Fingern, insbesondere dem Daumen und Zeigefinger, ein Ring oder Kreis gebildet wird oder im Wesentlichen ein Ring gebildet wird und die Hand wird so positioniert, dass das Objekt (6a-6c) aus der Perspektive des zweiten Auges von dem Ring beziehungsweise Kreis umschlossen wird;
b) die Hand (7) nimmt eine Haltung ein, in der Daumen und Zeigefinger gestreckt sind und ungefähr einen Winkel von 90° bilden oder symbolisieren sollen, und die Hand wird so positioniert, dass sich das Objekt (6a-6c) aus der Perspektive des zweiten Auges zumindest teilweise in einem Rechteck befindet, dessen zwei kurze Kantenlängen der Länge des Daumens entsprechen und dessen zwei lange Kantenlängen der Länge des Zeigefingers entsprechen, und dessen Position aus der Perspektive des zweiten Auges so ist, dass zwei Kanten mit dem Daumen und Zeigefinger übereinstimmen;
c) die Hand (7) nimmt eine Haltung ein, in der Daumen und Zeigefinger gemeinsam ungefähr ein U bilden und die Hand wird so positioniert, dass das Objekt (6a-6c), aus der Perspektive des zweiten Auges zumindest teilweise in dem U enthalten ist;
d) die Hand (7) nimmt eine Haltung ein, in der nur der Zeigefinger gestreckt ist und die Hand ist so positioniert, dass der Zeigefinger aus der Perspektive des zweiten Auges das Objekt (6a-6c) berührt oder zumindest in dessen Richtung deutet.

3. Verfahren nach einem der vorhergehenden Ansprüche ferner umfassend:
Aufnehmen der zweiten Hand des Benutzers (1); insbesondere mithilfe der zweiten Kamera;
wobei die Eingabehandlung zusätzlich darin besteht, dass die zweite Hand des Benutzers (1) eine Haltung und, aus der Perspektive des zweiten Auges des Benutzers in Bezug auf das Objekt (6a-6c), eine Position einnimmt, die der vorbestimmten Bedingung genügen, wobei die vorbestimmte Bedingung sowohl für die erste als auch für die zweite Hand die Haltung und die Position vorgibt.

4. Verfahren nach Anspruch 3, wobei die vorbestimmte Bedingung folgendes vorgibt:
die erste und die zweite Hand nehmen jeweils eine Haltung ein, in der Daumen und Zeigefinger gemeinsam ungefähr ein U bilden und die erste und die zweite Hand werden jeweils so positioniert, dass das Objekt (6a-6c), aus der Perspektive des zweiten Auges zumindest teilweise in dem jeweiligen U enthalten ist, insbesondere ist die Haltung und Position der ersten und der zweiten Hand derart, dass die Öffnungen der jeweiligen Us zueinander zeigen.

5. Verfahren nach einem der vorhergehenden Ansprüche, wobei das Bestimmen, dass der Benutzer (1) eine Eingabehandlung vornimmt, umfasst:
Bestimmen der räumlichen Position der Hand (7) in Bezug auf die Position der Anzeige der Datenbrille; und
Bestimmen der Position des Objektes (6a-6c) innerhalb der Anzeige.

6. Verfahren nach einem der Ansprüche 1 bis 4, wobei das Bestimmen, dass der Benutzer eine Eingabehandlung vornimmt, umfasst:
Bestimmen der räumlichen Position der Hand in Bezug auf das zweite Auge des Benutzers (1);
Bestimmen der Position des Objektes (6a-6c) innerhalb der Anzeige;
Bestimmen von Strahlengängen beziehungsweise von Vektoren von Punkten der Hand (7) zum zweiten Auge des Benutzers (1); und
Bestimmen der Position der Schnittpunkte der Strahlengänge beziehungsweise der Vektoren mit der Anzeige der Datenbrille;
Bestimmen der Position der Schnittpunkte mit der Anzeige in Bezug auf das angezeigte Objekt (6a-6c).

7. Verfahren nach Anspruch 5 oder 6, wobei die Datenbrille die zweite Kamera umfasst, deren Aufnahmerichtung bei bestimmungsgemäßem Gebrauch der Datenbrille im Wesentlichen in Richtung der Blickrichtung des Benutzers (1) beim Geradeausschauen gerichtet ist; und wobei die Kamera dazu eingerichtet ist auch die Entfernung von zumindest einigen aufgenommenen Bildpunkten in der Aufnahme zu bestimmen.

8. Verfahren nach einem der vorhergehenden Ansprüche, ferner umfassend:
Bestimmen, dass der Benutzer (1) eine zweite Eingabehandlung während der Zeitspanne vornimmt;
wobei die zweite Eingabehandlung darin besteht, dass die Hand (7) des Benutzers (1) die Haltung der ersten Eingabehandlung aufgibt oder wobei die zweite Eingabehandlung darin besteht, dass die Hand des Benutzers (1) eine vorgegebene Haltung einnimmt: und
Ausführen einer zweiten Aktion in Bezug auf das Objekt (6a-6c), wobei die zweite Aktion der zweiten Eingabehandlung vorab zugeordnet ist.

9. Verfahren nach einem der vorhergehenden Ansprüche, ferner umfassend:
Anzeigen von Teilen des Objektes (6a-6c) nur in Bereichen, in denen sie die Hand (7) des Benutzers (1), aus der Perspektive des zweiten Auges des Benutzers, nicht überdecken.

10. Vorrichtung, umfassend eine Datenbrille (2) mit einer Anzeige, zwei Kameras zur Aufnahme je eines Auges des Benutzers (1) und einer Kamera (3) zur Aufnahme einer Hand (7) des Benutzers (1) und elektronische Verarbeitungsmittel, wobei die Vorrichtung dazu eingerichtet ist, eines der Verfahren nach einem der Ansprüche 1 bis 9 auszuführen.

11. Computerprogramm, das dazu eingerichtet ist, eine Vorrichtung nach Anspruch 10 zur Ausführung eines Verfahrens nach einem der Ansprüche 1 bis 9 zu veranlassen, wenn es auf den als Computer ausgebildeten elektronischen Verarbeitungsmitteln der Vorrichtung ausgeführt wird.

## Claims

1. A method for interacting with an object (6a-6c) which is displayed to a user (1) via smart glasses (2), wherein the smart glasses (2) comprise a display, the method comprising the steps of:
displaying the object (6a-6c) for the user (1) using the display of the smart glasses (2);
detecting that the user (1) closes a first eye and keeps the first eye closed during a specified period of time using a first camera which records the first eye of the user (1);
recording a hand (7) of the user (1) using a second camera (3);
ascertaining the position of the smart glasses (2) relative to the second eye of the user (1) using a third camera of the smart glasses (2) which is directed toward the second eye;
determining that the user (1) performs an input action for the object (6a-6c) during the specified period of time;
wherein the input action includes the hand (7) of the user (1) assuming a configuration and, from the perspective of the second eye of the user (1), a position with respect to the object that satisfy a predetermined condition; and
carrying out an action with respect to the object (6a-6c), wherein the action is associated with the input action in advance.

2. A method according to claim 1, wherein the predetermined condition specifies one or more of the following:
a) the hand (7) assumes a configuration in which a ring or a circle is formed or substantially a ring is formed with the fingers, more especially the thumb and index finger, and the hand is positioned such that the object (6a-6c) is enclosed by the ring from the perspective of the second eye;
b) the hand (7) assumes a configuration in which the thumb and index finger are extended to form or symbolise an angle of approximately 90°, and the hand is positioned such that the object (6a-6c), from the perspective of the second eye, is at least partially located in a rectangle, the two short edge lengths of which correspond to the length of the thumb and the two long edge lengths of which correspond to the length of the index finger, and the position of the rectangle, from the perspective of the second eye, is such that two edges correspond to the thumb and index finger;
c) the hand (7) assumes a configuration in which the thumb and the index finger, together, form approximately a U shape, and the hand is positioned such that the object (6a-6c) is at least partially contained in the U shape from the perspective of the second eye; and
d) the hand (7) assumes a configuration in which only the index finger is extended and the hand is positioned such that the index finger touches the object (6a-6c), or at least points in its direction, from the perspective of the second eye.

3. A method according to any one of the preceding claims, further comprising the steps of:
recording the second hand of the user (1); more especially using the second camera; wherein the input action additionally consists of the second hand of the user (1) assuming a configuration and, from the perspective of the second eye of the user, a position with respect to the object (6a-6c) that meet the predetermined condition, wherein the predetermined condition specifies the configuration and the position for both the first hand and the second hand.

4. A method according to claim 3, wherein the predetermined condition specifies the following:
the first hand and the second hand each assume a configuration in which the thumb and the index finger, together, form approximately a U shape, and the first hand and the second hand are each positioned such that the object (6a-6c) is at least partially contained in the U shapes from the perspective of the second eye, and more especially the configuration and the position of the first hand and the second hand are such that the openings of the U shapes point toward one another.

5. A method according to any one of the preceding claims, wherein the step of determining that the user (1) performs an input action comprises the step of:
determining the spatial position of the hand (7) with respect to the position of the display of the smart glasses; and
determining the position of the object (6a-6c) within the display.

6. A method according to any one of claims 1 to 4, wherein the step of determining that the user performs an input treatment comprises the step of:
determining the spatial position of the hand with respect to the second eye of the user (1);
determining the position of the object (6a-6c) within the display;
determining optical paths or vectors of points of the hand (7) in relation to the second eye of the user (1); and
determining the position of the points of intersection of the optical paths or the vectors with the display of the smart glasses;
determining the position of the points of intersection with the display with respect to the displayed object (6a-6c).

7. A method according to claim 5 or 6, wherein the smart glasses comprise the second camera, the direction of recording of which, in the event that the smart glasses are being used as intended, is directed substantially in the viewing direction of the user (1) looking straight ahead; and wherein the camera is configured to also determine the distance of at least some recorded image points in the recording.

8. A method according to any one of the preceding claims, further comprising the steps of:
determining that the user (1) performs a second input action during the period of time;
wherein the second input action comprises the hand (7) of the user (1) abandoning the configuration of the first input action, or wherein the second input action comprises the hand of the user assuming a predetermined configuration; and
carrying out a second action with respect to the object (6a-6c), wherein the second action is associated with the second input action in advance.

9. A method according to any one of the preceding claims, further comprising the step of:
displaying parts of the object (6a-6c) only in regions in which they do not cover the hand (7) of the user (1), from the perspective of the second eye of the user.

10. A device comprising a pair of smart glasses (2) with a display, two cameras for recording one eye each of the user (1), and a camera (3) for recording a hand (7) of the user (1), and electronic processing means, wherein the device is designed to carry out one of the methods according to any one of claims 1 to 9.

11. A computer program which is designed to prompt a device according to claim 10 to carry out a method according to any one of claims 1 to 9 when executed on the electronic processing means of the device, which processing means are configured as a computer.

## Revendications

1. Procédé d'interaction avec un objet (6a-6c) qui est affiché à un utilisateur (1) par des lunettes intelligentes (2), les lunettes intelligentes (2) comprenant un affichage, comprenant des étapes consistant à :
afficher l'objet (6a-6c) pour l'utilisateur (1) à l'aide de l'affichage des lunettes intelligentes (2),
détecter à l'aide d'une première caméra des lunettes intelligentes qui prend une vue d'un premier oeil de l'utilisateur (1) que l'utilisateur (1) ferme son premier oeil et le maintient fermé pendant un laps de temps prédéfini,
prendre une vue d'une main (7) de l'utilisateur (1) à l'aide d'une seconde caméra (3),
établir l'assise des lunettes intelligentes (2) par rapport au second oeil de l'utilisateur (1) à l'aide d'une troisième caméra des lunettes intelligentes (2) qui est orientée en direction du second oeil,
déterminer que l'utilisateur (1) effectue un traitement de saisie d'objet (6a-6c) pendant le laps de temps,
le traitement de saisie étant constituée par le fait que la main (7) de l'utilisateur (1) prend une attitude et prend, à partir de la perspective du second oeil de l'utilisateur (1) concernant l'objet une position qui satisfait une condition prédéfinie, et
effectuer une action concernant l'objet (6a-6c), l'action étant associée au préalable au traitement de saisie.

2. Procédé conforme à la revendication 1,
selon lequel la condition prédéfinie fixe au moins l'une des situations suivantes selon lesquelles :
a) la main (7) prend une attitude selon laquelle, avec les doigts, en particulier avec le pouce et l'index un anneau ou un cercle est formé, ou un cercle est essentiellement formé et la main est positionnée de sorte que à partir de la perspective du second oeil l'objet (6a-6c) soit entouré par l'anneau ou le cercle,
b) la main (7) prend une attitude selon laquelle le pouce et l'index sont étirés et forment environ un angle de 90° ou peuvent le symboliser et la main est positionnée de sorte que, à partir de la perspective du second oeil l'objet (6a-6c) se trouve au moins partiellement dans un rectangle dont les deux petits côtés correspondent à la longueur du pouce et dont les deux grands côtés correspondent à la longueur de l'index, et dont la position, à partir de la perspective du second oeil est telle que deux côtés correspondent au pouce et à l'index,
c) la main (7) prend une attitude selon laquelle le pouce et l'index forment conjointement, essentiellement un U et la main est positionnée de sorte que, à partir de la perspective du second oeil l'objet (6a-6c) soit contenu au moins partiellement de le U,
d) la main (7) prend une attitude selon laquelle seul l'index est étiré et la main est positionnée de sorte que, à partir de la perspective du second oeil l'index soit en contact avec l'objet (6a-6c) ou au moins pointé dans sa direction.

3. Procédé conforme à l'une des revendications précédentes comprenant en outre des étapes consistant à :
prendre une vue de la seconde main de l'utilisateur (1), en particulier à l'aide la seconde caméra,
le traitement de saisie étant en outre ensuite constitué par le fait que la seconde main de l'utilisateur (1) prend une attitude et prend, à partir de la perspective du second oeil de l'utilisateur concernant l'objet (6a-6c) une position qui satisfait à la condition prédéterminée, la condition prédéterminée fixant l'attitude et la position aussi bien pour la première main que pour la seconde main.

4. Procédé conforme à la revendication 3,
**caractérisé en ce que** la condition prédéfinie fixe que :
la première main et la seconde main prennent respectivement une attitude selon laquelle les pouces et les index forment conjointement, essentiellement un U et que la première main et la second main soient respectivement positionnées de sorte que, à partir de la perspective du second oeil, l'objet (6a-6c) soit au moins partiellement contenu dans le U respectif, et en particulier l'attitude et la position de la première main et de la seconde main sont telles que les ouvertures des U respectifs soient tournées l'une vers l'autre.

5. Procédé conforme à l'une des revendications précédentes,
selon lequel le détermination que l'utilisateur (1) effectue un traitement de saisie comporte des étapes consistant à :
déterminer la position spatiale de la main (7) par rapport à la position de l'affichage des lunettes intelligentes, et
déterminer la position de l'objet (6a-6c) dans l'affichage.

6. Procédé conforme à l'une des revendications 1 à 4,
selon lequel la détermination du fait que l'utilisateur effectue un traitement de saisie comporte des étapes consistant à :
déterminer la position spatiale de la main par rapport au second oeil de l'utilisateur (1),
déterminer la position de l'objet (6a-6c) dans l'affichage,
déterminer des trajets de rayons ou des vecteurs de point de la main (7) vers le second oeil de l'utilisateur (1), et
déterminer la position des intersections des trajets de rayons ou des vecteurs avec l'affichage des lunettes intelligentes,
déterminer la position des intersections avec l'affichage concernant l'objet (6a-6c) affiché.

7. Procédé conforme à la revendication 5 ou 6,
selon lequel les lunettes intelligentes comprennent la seconde caméra dont la direction de prise de vue est orientée, lors d'une utilisation correcte des lunettes intelligentes essentiellement dans la direction du regard de l'utilisateur (1) lorsqu'il regarde tout droit, et la caméra est également réalisée pour déterminer la distance d'au moins certains points d'image pris dans la prise de vue.

8. Procédé conforme à l'une des revendications précédentes, comprenant en outre des étapes consistant à :
déterminer que l'utilisateur (1) à effectué un second traitement de saisie pendant le laps de temps,
le second traitement de saisie étant constitué par le fait que la main (7) de l'utilisateur (1) abandonne l'attitude du premier traitement de saisie, ou le second traitement de saisie étant constitué par le fait que la main de l'utilisateur (1) prend une attitude prédéfinie, et
effectuer une seconde action concernant l'objet (6a-6c), la seconde action étant associée au préalable au second traitement de saisie.

9. Procédé conforme à l'une des revendications précédentes,
comprenant en outre une étape consistant à :
afficher des parties de l'objet (6a-6c) uniquement dans des zones dans lesquelles, elles ne recouvrent pas la main (7) de l'utilisateur à partir de la perspective du second oeil de l'utilisateur (1).

10. Dispositif comprenant des lunettes intelligentes (2) comportant un affichage, deux caméras permettant chacune de prendre des vues d'un oeil de l'utilisateur (1) et une caméra (3) permettant de prendre des vues d'une main (7) de l'utilisateur (1) ainsi que des moyens de traitement électronique, le dispositif étant susceptible de permettre la mise en oeuvre d'un procédé conforme à l'une des revendications 1 à 9.

11. Programme d'ordinateur réalisé pour permettre à un dispositif conforme à la revendication 10, de mettre en oeuvre un procédé conforme à l'une des revendications 1 à 9, lorsqu'il est exécuté sur les moyens de traitement électronique du dispositif qui sont réalisés sous la forme d'un ordinateur.
